Europäisches Patentamt

European Patent Office

Office européen des brevets

(19)

(11)    EP 1 123 736 A1

(12)    **EUROPEAN PATENT APPLICATION**
published in accordance with Art. 158(3) EPC

(43) Date of publication:
16.08.2001  Bulletin 2001/33

(51) Int Cl.⁷: **B01J 19/26**, C09C 1/48,
B01F 5/02

(21) Application number: 99918393.2

(22) Date of filing: 01.04.1999

(86) International application number:
PCT/RU99/00096

(87) International publication number:
WO 99/51334 (14.10.1999 Gazette 1999/41)

(84) Designated Contracting States:
DE FR GB IT

(30) Priority:  07.04.1998  RU 98106590

(71) Applicant: Joint-Stock Company "Yaroslavsky
Tekhnichesky Uglerod"
Yaroslavl, 150000 (RU)

(72) Inventor: ORLOV, Vadim Jurievich
Yaroslavl, 150000 (RU)

(74) Representative: Targett, Kenneth Stanley
48 Meadowsweet Way
Horton Heath, Hampshire SO50 7PD (GB)

(54)    **REACTOR FOR THE PRODUCTION OF CARBON BLACK**

(57)    The present invention relates to a reactor for producing carbon black in which the particles have a size of between 110 and 600° A. This reactor comprises the following members connected in series: a combustion chamber with system of burning the fuel together with air; a multiple-channel mixing nozzle having a flow section with a global surface area of between 0.036 and 0.36 m as the ratio between a channel diameter ($d_c$) and the diameter at the global surface area of the flow section in said mixing nozzle ($d_{ef}$) ranges from 0.35 to 0.72, said nozzle being provided with raw-material injectors; and a reaction chamber comprising systems for cooling down the gaseous carbon-black-containing products. This reactor has a large unitary rate (up to 5000 kg/h of raw material) and is capable of producing carbon-black at a particle coalescence rate in the apparatus that ranges from 0.03 to 0.09. The use of the carbon black thus obtained in vulcanized rubber mixtures increases the physical and mechanic indices.

EP 1 123 736 A1

Printed by Jouve, 75001 PARIS (FR)

**Description**

The present invention relates to carbon black industry, namely, to the reactor for carbon black production. The produced black is used as a filler for polymeric materials.

There is known a reactor for black production, comprising the following members connected in series and co-axially: combustion chamber with systems for burning the fuel together with air, mixing nozzle with feedstock nozzles and reaction chamber comprising systems for cooling down the gaseous-carbon black containing products /1/. Black produced in such a reactor doesn't satisfy the customers in the reinforcing properties.

Another reactor is also known for production of black, the particle sizes of which ranges between 110 - 600 ° A. The reactor comprises the following members connected in series and co-axially: combustion chamber with systems for burning the fuel together with air, mixing nozzle with feedstock nozzles and nozzles for water, reaction chamber comprising systems for cooling down and removing gaseous-carbon black containing products. Black produced in such a reactor is characterized with high reinforcing properties, but nowadays does not satisfy constantly growing requirements of the industry.

This reactor was chosen as a prototype /2/.

The aim of the present invention is increasing reinforcing properties of the black, increasing strength indexes of polymeric materials. The indicated aim is achieved by means of the fact that the reactor for production of black with particle sizes ranging between 110 — 600 ° A, which comprises installed in series combustion chamber with systems for burning the fuel together with air, mixing nozzle with feedstock nozzles and reaction chamber comprising systems for cooling down the gaseous-carbon black containing products, has a mixing nozzle of multi-channel shape with flow section having total surface area of 0,036 — 0,36 m$^2$ with the ratio between the channel diameter ($d_c$) and the diameter of the total surface area of the flow section ($d_{ef}$) ranging from 0,35 to 0,72.

The reactor is used for production of black with a particle coalescence rate in aggregate of 0,03 — 0,09.

According to the invention the total area of mixing nozzle flow section ranges between 0,036 — 0,36 m$^2$. In case of using reactors with multiple-channel nozzle having

total area of flow section less than 0,036 m$^2$ / Table 5, note 1 / on the one hand there appear very strong re-circulation flows, hampering laminar movement of the products, on the other hand, black is produced, which does not differ from the prototype in its reinforcing properties. In case of using reactors with multiple-channel nozzle having total area of flow section over 0,36 m$^2$, black is produced which doesn't differ in its reinforcing properties from the black produced as prototype with addition of difficulties, arising in manufacturing of shaped refractories with considerable increasing of number of channels.

According to the invention the ratio between channel diameter ($d_c$) and the diameter of the total mixing nozzle flow section area ($d_{ef}$) must lie between 0,035 — 0,72 (in a single-channel mixing nozzle this ratio is equal to 1). Increasing of the upper limit leads to the phenomenon of non-homogeneity of the black / Table 5, note 5,6 / (the curve of particle size distribution becomes considerably broader) and decreasing the limit lower than 0,35 causes production of black with considerable quantity of non-decomposed heavy hydrocarbons on its surface / Table 5, note 7 /. Data confirming these conclusions are given in Table 5.

The effect of increasing reinforcing properties of the black produced in a reactor with a multiple-channel mixing nozzle with total area of flow section of mixing nozzles between 0,036 and 0,36 m$^2$ and ratio $d_c$ / $d_{ef}$ ranging between 0,35 — 0,72 needs some explanation.

The development of heavy-loaded reactors design with load of feedstock 4000 - 6000 kg/h caused the necessity of increasing overall dimensions of the reactor including the diameter of the mixing nozzle. At the same time it was shown experimentally, that increasing diameter of mixing nozzle over a certain size with observing flow movement parameters (speed, time, temperature) leads to production of black with reduced reinforcing properties. For illustration Table 1 gives data on changes of the module of cured rubber compound produced on the standard receipt with artificial rubber

CKMC-30-APK and an experimental black.

Table 1.

| Type of reactor | Diameter of mixing nozzle, m | Number of channels with length 1 m | Linear speed of flow movement in mixing nozzle, m/s | Time of flow passing through mixing nozzle, s | Average particle size of the produced black, °A | Temperature in mixing nozzle, °C | Module at 300 % tension, kgf/cm$^2$ |
|---|---|---|---|---|---|---|---|
| 1 | 2 | 3 | 4 | 5 | 6 | 7 | 8 |
| IST-39 1000 kg/h | 0,2 | 1 | 560 | 0,002 | 230 | 1540 | 196 |
| RUT-2000 1600 kg/h | 0,35 | 1 | 560 | 0,002 | 290 | 1540 | 144 |
| RS-3000 3000 kg/h | 0,35 | 1 | 560 | 0,002 | 320 | 1540 | 137 |
| RV-4000 4000 kg/h | C, 45 | 1 | 560 | 0,002 | 430 | 1540 | 87 |

The analysis of the data of the Table gave grounds to suppose that with further increasing of the load on the reactor and increasing the sizes of the reactor it was possible to produce only semi-active or low-active blacks. Increasing loads on the reactor without changing the diameter of mixing nozzle resulted in production of black with considerable increasing of non-decomposed feedstock content, it is confirmed by the data in Table 2.

Table 2

| Number of position | $d_c$ | Load in feedstock, kg/h | Output of black, % mass | Specific external surface of black, m$^2$/g | Iodine number, ml / g | Translucence of toluene extract, % |
|---|---|---|---|---|---|---|
| 1 | 0,200 | 1500 | 43 | 106 | 119 | 100 |
| 2 | 0,200 | 2000 | 44 | 110 | 126 | 100 |
| 3 | 0,200 | 2500 | 38 | 84 | 82 | 95 |
| 4 | 0,200 | 3000 | 28 | 63 | 60 | 70 |
| 5 | 0,200 | 3500 | 30 | 51 | 32 | 80 |
| 6 | 0,200 | 4000 | large quantity of feedstock on the black | | | |

With sharp rise of load on the reactor from 1500 kg/h to 4000 kg with diameter of mixing nozzle 0,200 m, the output of black has fallen sharply, at first increasing, and then falling of black external surface and iodine number was observed together with sharp increasing of non-decomposed feedstock on the black.

Solving the problem was making a multiple-channel mixing nozzle, it allowed increasing loads on the reactor to 5000 kg and increasing reinforcing properties of the black.

Obviously it is explained by the fact, that in the process of black formation heat (light) radiation from incandescent wall of mixing nozzle, and more exactly, intensity of this radiation to a unit of volume of black-gas mixture in mixing nozzle is of great significance. Factually proportional increasing of diameter results in proportional increase of internal surface area of mixing nozzle, and change of volume is in degree dependence on the diameter.

Increasing the diameter of the mixing nozzle after a certain limit results in the fact that the «value» of radiation does not fully cover the area of black formation, and as a result increasing of the average particle size of the black begins. This phenomenon fully correlates with the geometry of the mixing nozzle, i.e. with the total area of flow section of the mixing nozzle. In case of using for example a three-channel mixing nozzle with diameter 0,15 m the total area of the section is equal to the sum of flow sections of the channels :

$$S_{ef} = S_1 + S_2 + S_3 = \eth \, d^2 \, 3/4 = (3,14 \times 0,15 \times 0,15 \times 3)/4 = 0,018 \; m^2 \times 3 = 0,054 \; m^2.$$

The calculated diameter of the mixing nozzle is equal to the diameter of the total area of the flow section $d_{ef} = \sqrt{(4 \times S_{ef})/3,14} = \sqrt{4 \times 0,54 / 3,14} = 0,262$ m with some limitation of signs after the point.

Thus in case of using a reactor having a mixing nozzle comprising one channel with diameter 0,262 m, total area of flow section 0,054 $m^2$, we produce black with sharply expressed fall of reinforcing properties, the ratio of the area of the internal surface of the channel and its volume $4d \, \eth 1 / \eth d^2 1 = \eth 4 / \eth d_{ef} = 15,26$, where 1 — channel length, and in case of using three-channel nozzle with diameter 0,15 m, 4/0,15 = 26,6.

The ratio between these values $4/d_{ef}$ and $4/d_c$ determines output of black with high reinforcing properties $4/d_{ef} : 4/d_c = d_c/d_{ef} = 0,35 - 0,72$, these values are determined experimentally.

Testing such reactors with channel diameter 0,18 m gave additionally quite an unexpected result: stability in black particles size distribution with reducing the value $d_c/d_{ef}$ when $d_c = d_1 = d_2 = d_3 ..... = d_n$

The data are confirmed by the results of Table 3.

Table 3

| Number of channels in mixing nozzle | Diameter of channel $d_c$, m | Area of mixing nozzle flow section, $m^2$ | Diameter of flow section area of mixing nozzle, $d_{ef}$, m | Ratio between channel surface area and its volume, $4/d_c$ | Ratio between total surface area of mixing nozzle and its volume $4/d_{ef}$ | $\frac{d_c}{d_{ef}}$ | Average diameter of particles, % ° A | | |
|---|---|---|---|---|---|---|---|---|---|
| | | | | | | | over 300 | 300 - 200 | under 200 |
| 1 | 2 | 3 | 4 | 5 | 6 | 7 | 8 | 9 | 10 |
| 1 | 0,18 | 0,025 | 0,18 | 22,2 | 22,2 | 1,0 | 18 | 62 | 20 |
| 2 | 0,18 | 0,05 | 0,253 | 22,2 | 15,8 | 0,71 | 20 | 68 | 12 |
| 3 | 0,18 | 0,075 | 0,309 | 22,2 | 12,9 | 0,58 | 17 | 73 | 10 |
| 4 | 0,18 | 0,100 | 0,356 | 22,2 | 11,7 | 0,506 | 15 | 80 | 5 |
| 5 | 0,18 | 0,125 | 0,399 | 22,2 | 11,49 | 0,452 | 7 | 85 | 8 |
| 6 | 0,18 | 0,150 | 0,430 | 22,2 | 9,30 | 0,419 | 6 | 90 | 4 |
| 7 | 0,43 | 0,150 | 0,430 | 26,6 | 26,6 | 1 | 82 | 10 | 8 |

Example 1 ( checking )

The reactor ( Drawing 1) for black production includes housing 1, in which the following members are connected in series: combustion chamber 2, mixing nozzle 3 comprising one channel with diameter ($d_c$) 0,15 m, total area of flow section 0,018 $m^2$, reaction chamber 4 and chamber for removal of cooled products 5.

Combustion chamber is equipped with air chamber 6 for feeding air and chamber for gas input 7. In the reaction chamber water nozzles for pre-hardening and cooling of black-gas mixture are installed. Combustion chamber, mixing nozzle, reaction chamber and chamber for removal of cooled products from the reactor are made of refractory goods.

Air pre-heated to the temperature 400 ° C in amount of 14000 $m^3$ and fuel gas in amount of 1000 $m^3$/h are fed into combustion chamber 2. The heated to 220 ° C hydrocarbon feedstock ( mixture of anthracene oil with heavy gas oil in ratio 80 : 20 in weight ) in amount of 1500 kg/h is fed into the flow of full combustion products into the channel of mixing nozzle through feedstock nozzles.

In the channel of the mixing nozzle the feedstock is decomposed forming black-gas mixture, then it comes into the reaction chamber, cooled and then is put out for filtration. After filtration the black is pelletized by the known methods. The data on the process of black formation and black quality are given in Table 4, experiment 1.

Example 2 (experimental)

The reactor ( Drawing 2 ) for black formation comprises housing 1, in which the following members are connected in series : combustion chamber 2, mixing nozzle 3, comprising 2 channels (8, 9) with diameter 0,15 m, total area of flow section 0,036 $m^2$ with ratio between the channel diameter ( $d_c$) and total surface of flow section diameter ($d_{ef}$) $d_c$ / $d_{ef}$ = 0,7. The channels of the mixing nozzle are located parallel to the reactor axis. Feedstock nozzles 11 are installed in both channels. The combustion chamber is equipped with air chamber 6 for air feeding and with chamber for gas feeding 7. In the reaction chamber 4 are installed water nozzles 12 for pre-hardening and cooling of black mixture. Black-gas mixture goes for filtration through chamber 5 for output of cooled products.

The combustion chamber, mixing nozzle, reaction chamber and chamber for output of cooled black-gas-containing products are formed with lining 16, made inside housing 1 of refractory goods. All the other reactors, described in the examples, are made by an analogous method, only the number of mixing nozzle channels and their diameter vary.

Air preheated to 400 ° C in amount 14000 $m^3$/h and fuel gas in amount 1000 $m^3$/h are fed into combustion chamber 2. The heated to 220 ° C hydrocarbon feedstock (mixture of anthracene oil with heavy gas oil in ratio 80 : 20 in weight) in amount 4000 kg is fed into the flow of full combustion products into the channels of mixing nozzle through feedstock nozzles. In the channels of the mixing nozzle the feedstock is decomposed forming black-gas mixture.

The area of total flow section of mixing nozzle is equal to the sum of flow section of each channel $S_{tot}$ = $S_1$ + $S_2$. From the channels of mixing nozzle the black-gas products come into the reaction chamber, in the end of which the products are cooled to 700 ° C by means of injection of water heated to 95 ° C through water nozzles. Then black-gas products are cooled through the wall and output for filtration, after filtration the black is pelletized by known methods.

The data on the process of black formation and black quality are given in Table 4, example 2.

The experiment was repeated using the reactor and mixing nozzle with 3 channels (Drawing 3).

In the reactor black was produced according to the description of example 2 with increasing the load in feedstock. The data on the black quality are given in Table 4, example 3.

The experiment was repeated using the reactor and (Drawing 4) mixing nozzle with 4 channels, diameter 0,150 m, total area of the mixing nozzle cross section 0,072 $m^2$
and ratio $d_c/d_{ef}$ = 0,500. In the reactor black was produced according to the description of example 2 with increasing the load in feedstock. The data on the black quality are given in Table 4, example 4.

The experiment was repeated using the reactor, mixing nozzle comprising 5 channels with diameter 0,15 m ( Drawing 5 ). Black is produced in this reactor according to the description of example 2. The load of the reactor in feedstock makes 4000 kg/h. The data on the black quality are given in Table 4, example 5.

The experiment was repeated using the reactor with mixing nozzle comprising 6 channels with diameter 0,15 m ( Drawing 6 ). Black is produced in the reactor according to the description of example 2 with increasing the load in feedstock. The data on black quality are given in Table 4, example 6.

For comparison reactors are used having single-channel mixing nozzle with the area of cross section equal to the area of cross section of the mixing nozzle :

$K_1$ - 2 channels, diameter $d_c$ = 0,15 m, where the diameter of single-channel nozzle is equal to 0,21 m.

$K_2$ - 3 channels, diameter $d_c$ = 0,15 m, where the diameter of single-channel nozzle is equal to 0,26 m.

$K_3$ - 4 channels, diameter $d_c$ = 0,15 m, where the diameter of single-channel nozzle is equal to 0,30 m.

$K_4$ - 5 channels, $d_c$ = 0,15 m, where the diameter of the nozzle is equal to 0,34 m.

Black was produced in the reactors according to the description of example 1 with a load in feedstock: $K_1$ = 1500 kg/h, $K_2$ = 1500 kg/h, $K_3$ = 2000 kg/h, $K_4$ = 3000 kg/h.

The data are given in Table 4, examples $K_1$, $K_2$, $K_3$ and $K_4$.

As it follows from the analysis of the data in Table 4 (examples $K_1$, $K_2$, $K_3$ and $K_4$), the replacing of multiple-channel nozzle for single-channel nozzle (equivalent in area of flow section), in reactor results in production of black with increased value of particle size, reduced opening of the aggregate, with noticeable reducing of the module and strength of cured rubbers.

Example 7.

The coditions of experimtnt 1 are repeated, but a single-channel mixing nozzle with diameter 0.2 v is used. The data on the black quality are given in Table 4, example 7.

Example 8.

The conditions of experiment, epamples 2,3,4 are repeated, but channels with diameter 0.2 m are used. The data on the process of black formation and black quality are given in Table 4, examples 8 - 12.

For comparison reactors are used which have single-channel mixing nozzle with the area of cross section equal to the area of cross section of the mixing nozzle:

　　K5 - two channels, diameter 0,2 m, where the diameter of the single-channel nozzle is equal to 0,28 m.
　　K6 - three channels, diameter 0,2 m, where the diameter of the single-channel mixing nozzle is equal to 0,34 m.
　　K7 - four channels, diameter 0,2 m, where the diameter of the single-channel mixing nozzle is equal to 0,398.

In analogy with the examples, where reactors with multiple-channel mixing nozzle with diameter 0,15 m are used, in this case also increase in average black particle size is observed, the module and strength of cured rubbers decrease.

Examples from 14 to 18, comparative data K8 - K10, examples 20 - 23,where multiple-channel mixing nozzle is used in reactors with channel diameter 0,25 and 0.30 m (Table 4) completely confirm the data of experiments 2 -12.

Table 4

| No of examhle | K m | Number of channels | Area of flow section of mixing nozzle, S tffect | Effective diameter of mixing nozzle, m | Ratio 4/dc | Ratio 4/d ef | Black output. % mass | Load on the reacnor in feedstock, kg/h |
|---|---|---|---|---|---|---|---|---|
| 1 | 2 | 3 | 4 | 5 | 6 | 7 | 8 | 9 |
| 1 | 0.15 | 1 | 0,018 | 0,15 | 26,6 | 26,6 | 42 | 1500 |
| 2 | 0.15 | 2 | 0.036 | 0,21 | 26,6 | 19 | 48 | 2000 |
| 3 | 0.15 | 3 | 0,054 | 0,26 | 26,6 | 15.3 | 54 | 3000 |
| 4 | 0.15 | 4 | 0,072 | 0,30 | 26.6 | 13.3 | 60 | 4000 |
| 5 | 0.15 | 5 | 0,090 | 0,34 | 26.6 | 11,7 | 65 | 4000 |
| 6 | 0,15 | 6 | 0.10 | 0,371 | 26.6 | 10.6 | 67 | 5000 |
| K1 | 0.21 | 1 | 0.036 | 0,21 | - | 19 | 42 | 1500 |
| K2 | 0.26 | 1 | 0.054 | 0,26 | - | 15,3 | 40 | 1500 |
| K3 | 0,30 | 1 | 0,072 | 0,30 | - | 13,3 | 45 | 2000 |
| K4 | 0,34 | 1 | 0,090 | 0,34 | - | 11,7 | 46 | 3000 |
| 7 | 0,2 | 1 | 0.0319 | 0,2 | 20 | 20 | 43 | 1500 |
| 8 | 0.2 | 2 | 0,0628 | 0,282 | 20 | 14.2 | 52 | 2000 |
| 9 | 0,2 | 3 | 0.0942 | 0.34 | 20 | 11.76 | 54 | 2000 |
| 10 | 0.2 | 4 | 0,125 | 0,398 | 20 | 10,05 | 60 | 3000 |
| 11 | 0.2 | 5 | 0.158 | 0,448 | 20 | 8.92 | 64 | 4000 |
| 12 | 0.2 | 6 | 0.187 | 0,487 | 20 | 8.2 | 65 | 5000 |
| K5 | 0.28 | 1 | 0.0618 | 0,28 | - | 14.2 | 42 | 1500 |
| K6 | 0,34 | 1 | 0.0932 | 0,34 | - | 11.76 | 40 | 2000 |
| K7 | 0,398 | 1 | 0,125 | 0.398 | - | 10 | 42 | 4000 |
| 13 | 0.25 | 1 | 0.049 | 0,25 | 16 | 16 | 46 | 2000 |
| 14 | 0,25 | 2 | 0.098 | 0,353 | 11,33 | 16 | 51 | 2000 |
| 15 | 0.25 | 3 | 0,147 | 0.432 | 9,2 | 16 | 60 | 3000 |

| 16 | 0,25 | 4 | 0,196 | 0,500 | 8 | 16 | 62 | 3000 |
|---|---|---|---|---|---|---|---|---|
| 17 | 0.25 | 5 | 0,245 | 0,558 | 7.16 | 16 | 66 | 4000 |
| 18 | 0.25 | 6 | 0.294 | 0,610 | 6.55 | 16 | 67 | 5000 |
| K8 | 0.353 | 1 | 0.098 | 0.353 | 11.33 | - | 43 | 3000 |
| K9 | 0,500 | 1 | 0,196 | 0.500 | 8 | - | 48 | 3000 |
| K10 | 0,558 | 1 | 0,245 | 0.558 | 7,16 | - | 52 | 4000 |
| 19 | 0,30 | 1 | 0,071 | 0,30 | 13.3 | 13,3 | 50 | 2000 |
| 20 | 0.30 | 2 | 0.142 | 0,425 | 9,4 | 13.3 | 52 | 2000 |
| 21 | 0.30 | 3 | 0,213 | 0,520 | 7.6 | 13.3 | 54 | 3000 |
| 22 | 0,30 | 4 | 0.283 | 0,601 | 6,6 | 13.13 | 60 | 4000 |
| 23 | 0.30 | 5 | 0,359 | 0.676 | 5.9 | 13,13 | 62 | 5000 |

Continuation of Table 4

| Particle size A$^0$ | Coalescence rate of particles in an aggregate | Module 300 % kg/cm$^2$ | Tensile strength kg/cm | $d_c/d_{ef}$ |
|---|---|---|---|---|
| 10 | 11 | 12 | 13 | 14 |
| 230 | 0,031 | 113 | 316 | 1 |
| 240 | 0.030 | 152 | 326 | 0,414 |
| 235 | 0.041 | 164 | 331 | 0,598 |
| 233 | 0.040 | 186 | 340 | 0,500 |
| 244 | 0,037 | 216 | 349 | 0,44 |

| | | | | |
|---|---|---|---|---|
| 245 | 0,046 | 241 | 368 | 0,39 |
| 230 | 0,034 | 114 | 306 | 1 |
| 360 | 0,052 | 83 | 267 | 1 |
| 412 | 0,064 | 71 | 206 | 1 |
| 516 | 0,073 | 84 | 193 | 1 |
| 220 | 0,044 | 96 | 306 | 1 |
| 225 | 0,043 | 126 | 342 | 0,70 |
| 228 | 0,041 | 130 | 350 | 0,58 |
| 206 | 0,038 | 135 | 371 | 0.52 |
| 221 | 0,039 | 140 | 374 | 0,44 |
| 230 | 0.050 | 161 | 380 | 0,40 |
| 380 | 0,064 | 91 | 123 | 1 |
| 460 | 0,080 | 75 | 120 | 1 |
| 650 | 0.084 | 35 | 86 | 1 |
| 270 | 0,047 | 116 | 302 | 1 |
| 213 | 0,044 | 161 | 344 | 0,708 |
| 226 | 0.051 | 175 | 362 | 0.57 |
| 236 | 0,061 | 184 | 363 | 0,50 |
| 218 | 0,044 | 190 | 373 | 0,448 |
| 221 | 0,053 | 206 | 400 | 0.409 |
| 313 | 0,661 | 111 | 293 | 1 |
| 518 | 0,081 | 56 | 114 | 1 |
| 570 | 0,080 | 58 | 117 | 1 |
| 280 | 0,044 | 112 | 294 | 1 |
| 260 | 0,047 | 142 | 329 | 0,707 |
| 251 | 0,052 | 167 | 363 | 0,57 |
| 261 | 0,063 | 171 | 367 | 0,446 |
| 253 | 0,062 | 184 | 376 | 0.444 |

As it follows from the analysis of the data in Table 4, a multiple-channel mixing nozzle with total area of flow section 0,036 - 0,36 $m^2$ with the ratio between channel diameter (dc) and the diameter of total area of flow section ($d_{ef}$) ranging 0,35 - 0,72 increases the possibility to rise the load in feedstock for the reactor to 5000 kg (more than 3 times), while black with high homogenuity of particles in size is produced, cured rubbers with such black have high strength indexes.

Table 5

| No of example | Total area of cross section of mixing nozzle m$^2$ | Ratio dc/def | dc | def | Module 300 % kgf/cm$^2$ | Tensile strength kgf/cm$^2$ | Note fractional composition of particles, size A °, % | | | | |
|---|---|---|---|---|---|---|---|---|---|---|---|
| | | | | | | | over under 400 100 | 400 - 300 | 300 - 200 | 200 - -100 | |
| 1 | 0,030 | 0.5 | 0,098 | 0.195 | 110 | 304 | | | | | |
| 2 | 0.036 | 0,5 | 0.109 | 0.21 | 166 | 341 | | | | | |
| 3 | 0,38 | 0,5 | 0.34 | 0,625 | 93 | 295 | | | | | |
| 4 | 0,36 | 0,5 | 0.34 | 0.677 | 141 | 352 | | | | | |
| 5 | 0,1 | 0,8 | 0,285 | 0,356 | 100 | 283 | 20 | 18 | 23 | 26 | 13 |
| 6 | 0,1 | 0,72 | 0,25 | 0.356 | 154 | 361 | - | 6 | 62 | 30 | 2 |
| 7 | 0,1 | 0,30 | 0,107 | 0.356 | 91 | - | feedstock on the black surface | | | | |
| 8 | 0.1 | 0.35 | 0,129 | 0,356 | 151 | 344 | | | | | |

Thus using in a high load reactor for black prroduction a multiple-channel mixing nozzle with total area of flow section 0,036 - 0,36 m$^2$ and with the ratio

Literature used

1. Ilyin A. I., Tzygankova E. N. Evaluation of primary aggregates size : in the article «The ways of carbon black industry development», Moscow, 1978, pages 28 - 26.

2. USSR. Author's Certificate No 799391 C09 1/48 22.09.80 - the prototype.

3. Patent of Czeckhoslovakia No 237450 C09 1/48 15.08.86.

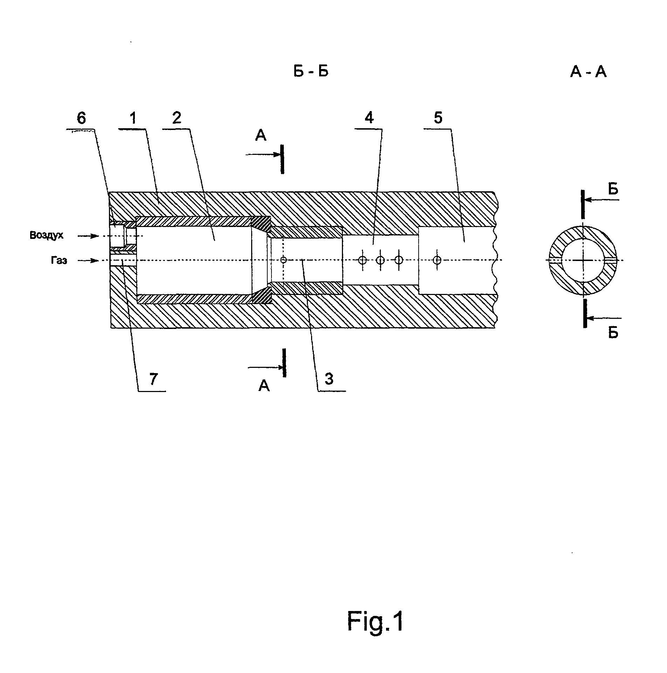

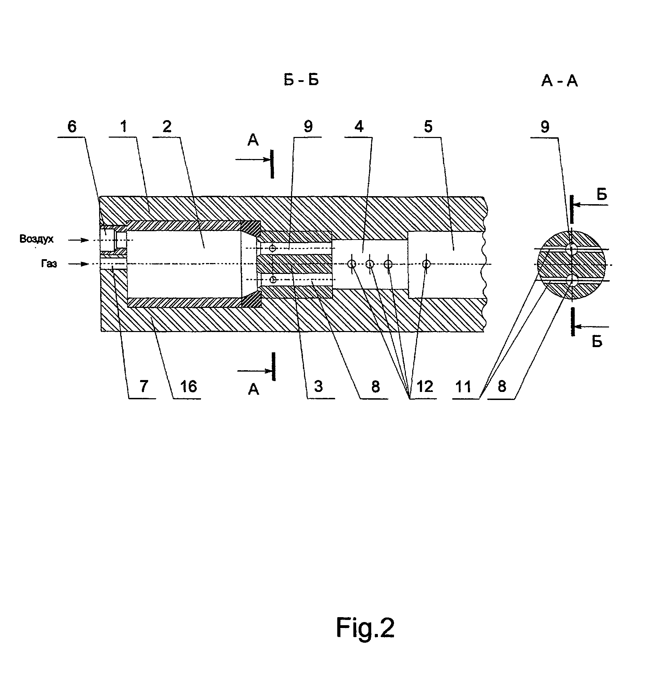

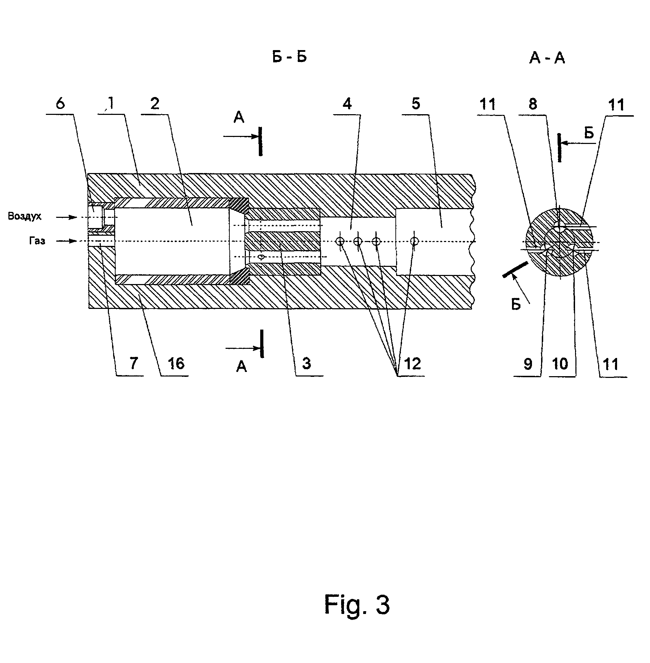

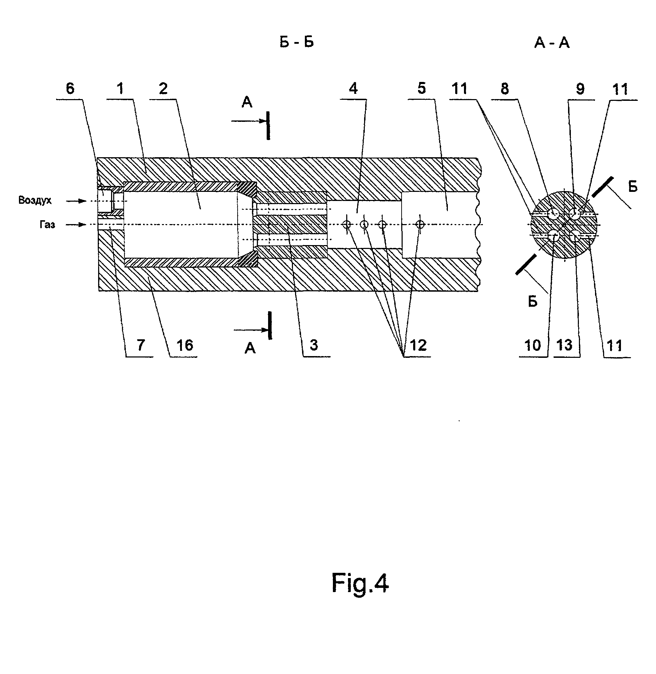

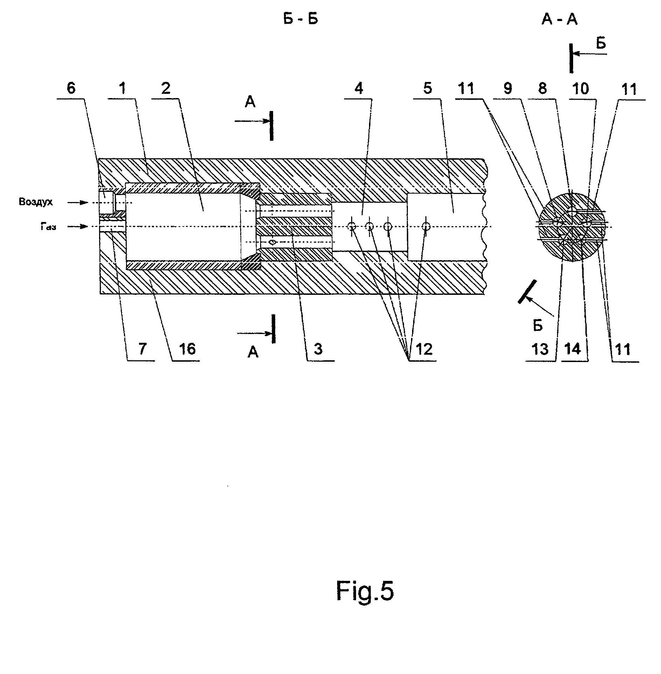

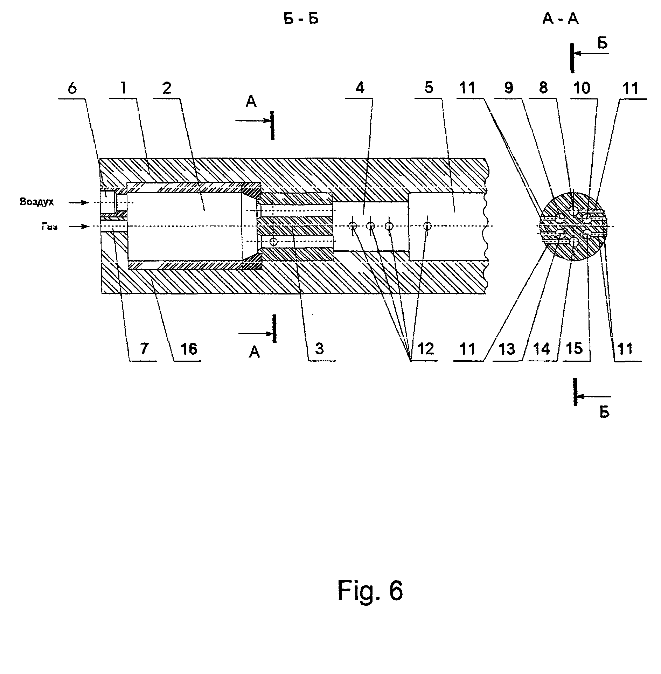

**Claims**

**1.** A reactor for production of carbon black with particle sizes 110 - 600 ° A comprising installed in series a combustion chamber with systems for burning fuel together with air, a mixing nozzle with feedstock nozzles and a reaction chamber with systems of cooling black-gas products, the reactor is notable for the fact, that in production of black with particles coalescence rate in an aggregate ranging 0,03 - 0.09, the mixing nozzle has a multiple-channel form with total area of mixing nozzle flow section 0,036 - 0,36 m$^2$ and the ratio between the channel diameter (dc) and the diameterof the total area of flow section
(d ef) ranging :
$d_c / d_{ef}$ = 0,35 - 0,72

Б - Б

А - А

6   1   2      А      4   5

Воздух →

Газ →

7      А      3

Fig.1

EP 1 123 736 A1

Б - Б          А - А

Воздух →

Газ →

**Fig.2**

12

Б - Б

А - А

Fig. 3

Б - Б

А - А

Воздух →

Газ →

Fig.4

Б - Б                                                    А - А

Fig.5

Fig. 6

16

## INTERNATIONAL SEARCH REPORT

| | International application No. |
|---|---|
| | PCT/RU 99/00096 |

**A. CLASSIFICATION OF SUBJECT MATTER [6]:**

IPC 6: B01J 19/26, C09C 1/48, B01F 5/02

According to International Patent Classification (IPC) or to both national classification and IPC

**B. FIELDS SEARCHED**

Minimum documentation searched (classification system followed by classification symbols)

IPC6:   B01J 19/26, C09C 1/48, 1/50, B01F 5/00, 5/02, 5/08

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2097398 C1 (AKTSIONERNOE OBSCHESTVO OTKRYTOGO TIPA "YAROSLAVSKY TEKHNICHESKY UGLEROD" 27 November 1997 (27.11.97) | 1 |
| A | RU 2083614 C1 (KONSTRUKTORSKO - TEKHNOLOGICHESKY INSTITUT TEKHNICHESKOGO UGLERODA SO RAN) 10 July 1997 (10.07.97) | 1 |
| A | SU 989238 A (NAUCHNO-ISSLEDOVATELSKY I PROEKTNO-KONSTRUKTORSKY INSTITUT UGLERODISTYKH PIGMENTOV I NAPOLNITELEY) 15 January 1983 (15.01.83) | 1 |
| A | US 3477816 A (THOMAS L. SHEPHERD et al) 11 November 1969 (11.11.69) | 1 |
| A | US 4360497 A (PHILLIPS PETROLEUM COMPANY) 23 November 1982 (23.11.82) | 1 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 July 1999 (07.07.99) | 02 September 1999 (02.09.99) |

| Name and mailing address of the ISA/ RU | Authorized officer |
|---|---|
| Facsimile No. | Telephone No. |

Form PCT/ISA/210 (second sheet) (July 1992)                    page 1 of 2